# EUROPEAN PATENT APPLICATION

(11) **EP 3 748 317 A1**
(43) Date of publication of application: **09.12.2020**
(21) Application number: 19178381.0
(22) Date of filing: 05.06.2019
(51) Int. Cl.: G01J 3/02, G01J 3/04, G01J 3/06, G01J 3/18, G01J 3/28

(54) **A METHOD AND A DEVICE FOR ACQUIRING SPATIALLY-RESOLVED SPECTRAL INFORMATION**

(71) Applicant: Karlsruher Institut für Technologie, 76131 Karlsruhe (DE)
(72) Inventor: Abdo, Mohammad, 79106 Freiburg (DE); Korvink, Jan G., 76228 Karlsruhe (DE)
(74) Representative: Altmann Stößel Dick Patentanwälte PartG mbB

(57) **Abstract**

The present invention relates to a method (160) and a device (110) for acquiring spatially-resolved spectral information (112) about a target (114), specifically for performing hyperspectral imaging. Herein, the method (160) comprising the following steps:
a) selecting an image line from an image of the target (114), wherein an extension of the image line defines an orientation (128) of the image line;
b) rotating the selected image line in a manner that the orientation (128) of the image line is aligned with respect to a reference orientation (140) of a diffractive optical element (142);
c) generating a spectrum (144) for a plurality of points on the selected image line by using the diffractive optical element (142);
d) recording the spectrum (144) of the selected image line; and
e) acquiring the spatially-resolved spectral information (112) about the target (114) by modifying the orientation (128) of the image line according to step a), repeating steps b) to d), and combining the recorded spectra (144).

The method (160) and a device (110) enable spatial scanning of the target image internally without need for a relative motion between the target (114) and an image sensor (150), ensure that light propagating from the target (114) is transmitted to the diffractive optical element (142) without a change in incidence angle, thereby simplifying data acquisition when determining the spatially-resolved spectral information (112), and provide a simple configuration which may open the door for further applications in future.

## Description

### Field of the invention

The present invention relates to a method and a device for acquiring spatially-resolved spectral information about a target, specifically for performing hyperspectral imaging.

### Related art

The term "hyperspectral imaging" refers to a method for acquiring spatially-resolved spectral information by providing a spectrum for every pixel within an image of a target. Typically, hyperspectral imaging is achieved by combining a first method of acquiring spectroscopy data with a second method of acquiring spatial imaging data, wherein both methods may, in particular, be performed by a single imaging device. The data acquired hereby can, preferably, be presented in a three-dimensional graphical representation by using two spatial dimensions covering the spatial imaging data and one spectral dimension comprising the spectroscopy data. This kind of three-dimensional graphical representation can also be referred to as "hyperspectral cube". The spatially-resolved spectral information can be used for various applications, including but not limited to determining a chemical composition of a target in a contact-free non-destructive fashion.

In particular, a spatial scanning method can be used for hyperspectral imaging. For this purpose, a sequential scanning of the target image is performed in order to acquire the spectral information for one part of the target image at a time. Herein, the spectrum is acquired by passing light through a diffractive or a dispersive optical element, e.g. a diffraction grating or a dispersive prism, and then recording the signal using an image sensor. As proposed by G. Vane, R.O. Green, T.G. Chrien, H.T. Enmark, E.G. Hansen, and W.M. Porter, The airborne visible/infrared imaging spectrometer (AVIRIS) in Remote sensing of environment, 1993, 44, pp. 127-143, a so-called "whiskbroom" approach can be applied which is based on a pinhole being used for scanning the target image in a point-by-point fashion, which, however, requires scanning across the two spatial dimensions of the image. As an alternative, Pantazis Z. Mouroulis and David A. Thomas, Compact low-distortion imaging spectrometer for remote sensing, Proc. SPIE 3438, Imaging Spectrometry IV, 1998; doi: 10.1117/12.328120, propose using a so-called "pushbroom" approach which is based on a slit aperture which is used for scanning the target image in a line-by-line fashion, which is faster and more efficient since it requires scanning across only one spatial dimension of the target image.

However, a major limitation of the spatial scanning is a requirement for a relative motion between the image sensor and the target. Therefore, different techniques based on the pushbroom approach were developed which enable the spatial scanning, thereby neither moving the image sensor nor the target. For this purpose, a projected image of the target is scanned rather than the target itself directly. F. Sigernes, D. A. Lorentzen, K. Heia, and T. Svenoe, Multipurpose spectral imager, Appl. Optics 39, 2000, pp. 3143-3153, propose using a planar mirror fixed on a high-resolution stepper motor for reflecting the target image to scan it across an imaging spectrograph. As an alternative, US 2008/0285027 A1 and Yang, J. H. Everitt, M. R. Davis, and C. Mao, A CCD camera-based hyperspectral imaging system for stationary and airborne applications, Geocarto Int. 18, 2003, pp. 71-80 disclose scanning the target image at the focal plane of the front optics across an entrance slit of the spectrograph, specifically by using linear actuators.

R. Arablouei, E. Goan, S. Gensemer, and B. Kusy, Fast and robust pushbroom hyperspectral imaging via DMD-based scanning, SPIE Opt. Eng. + Appl. 9948, 99480A, 11, 2016, describe a device which is designed for performing the spatial scanning of the target image internally by using a digital micromirror device (DMD) being adapted for scanning the target image by actuating one row of micromirrors at a time in order to reflect light from an image line of the target image to the image sensor through a transmission grating. However, switching from one row of micromirrors to the next row may result in a change of the incidence angle of the reflected light with respect to the transmission grating. This effect may lead to a change in a position of a resulting spectrum on the image sensor which can, thereby, affect a spectral calibration of the system.

M. Abdo, E. Forster, P. Bohnert, V. Badilita, R. Brunner, U. Wallrabe, and J. G. Korvink, Dual-mode pushbroom hyperspectral imaging using active system components and feed-forward compensation, Rev. Sci. Instruments 89, 083113-11, 2018, propose a pushbroom approach based on an internal scanning slit and a rotating camera. This combination enables spatial scanning without relative motion between the image sensor and the target, thereby, neither compromising a spectral calibration nor an imaging resolution. However, this advantage is achieved by an increased level of system complexity requiring a development of a feed-forward compensation function in order to synchronize the scanning motion of the slit and the rotation motion of the camera.

### Problem to be solved

It is therefore an objective of the present invention to provide a method and a device for acquiring spatially-resolved spectral information which at least partially overcomes the above-mentioned shortcomings and disadvantages of the state of the art.

It is a particular objective of the present invention to provide a method and a device for acquiring spatially-resolved spectral information about a target which enable spatial scanning of the target image internally without need for a relative motion between the target and an image sensor without additional external equipment, which ensure that light is transmitted to the diffraction grating without change in incidence angle, thereby simplifying data acquisition, and which provide a simple configuration that may open the door for further applications in future.

### Summary of the invention

This problem is solved by a method and a device for acquiring spatially-resolved spectral information with the features of the independent claims. Preferred embodiments, which might be realized in an isolated fashion or in any arbitrary combination, are listed in the dependent claims.

As used in the following, the terms "have", "comprise" or "include" or any arbitrary grammatical variations thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, as used in the following, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

In a first aspect, the present invention relates to a method for acquiring spatially-resolved spectral information about a target. As indicated above, the term "spatially-resolved spectral information" refers to a method also denominated as "hyperspectral imaging", "spectral imaging", or "imaging spectroscopy" which is configured for acquiring a set of data which comprises a spectrum for every pixel within an image of the target, which may herein also be denoted as "target image". The set of data as acquired hereby can, preferably, be presented in a three-dimensional graphical representation by using two spatial dimensions covering the spatial imaging data and one spectral dimension comprising the spectroscopy data. This kind of three-dimensional graphical representation can also be referred to as "hyperspectral cube". Further, the term "target" refers to any kind of object which can be accessed and analyzed by performing the method according to the present invention. Hereby, light which is used for obtaining information on the target can be admitted by the target itself, i.e. may originate from the target. Alternatively or in addition, another origin of the light may be feasible, specifically natural illumination, such as sunlight, or artificial illumination by using an illumination source, such as a laser diode, a light-emitting diode, a halogen lamp, or an incandescent lamp, wherein the light propagating from the target to the device may be reflected by the object and/or a reflection device connected to the object. However, other kinds of illumination of the target may also be feasible. Thus, the present method can, predominantly, be used for investigating the surface of the target, however, depending on a penetration depth of incident light used for this analysis, also a portion of the target below the surface of the target.

The method according to the present invention comprises the following steps a) to e):
a) selecting an image line from an image of the target, wherein an extension of the image line defines an orientation of the image line;
b) rotating the selected image line in a manner that the orientation of the image line is aligned with respect to a reference orientation of a diffractive optical element;
c) generating a spectrum for a plurality of points on the selected image line by using the diffractive optical element;
d) recording the spectrum of the selected image line; and
e) acquiring the spatially-resolved spectral information about the target by modifying the orientation of the image line according to step a), repeating steps b) to d), and combining the recorded spectra.

The indicated steps may, preferably, be performed in the given order, commencing with step a) and finishing with step e). Herein, any or all of the indicated steps may also be repeated several times and/or preformed concurrently in part. In addition, further steps which may or may not be disclosed herein may further be performed.

According to step a), an image line from a target image is selected, for which purpose the target image may be provided. As indicated above, the term "target" refers to any kind of object which can be accessed and analyzed by the present method for which the target image is provided for further processing. In general, the target image can be provided in any fashion known to the skilled person. Preferably, the target image may be an intermediate image of the target being generated by at least one refractive optical element. For this purpose, the at least one refractive optical element may, particularly, be located in front of the target and may be designated for generating the intermediate image of the target at a focal plane, wherein a location of the focal plane may depend on a distance between the at least one refractive optical element and the target and the imaging properties of the at least one refractive optical element. Preferably, the at least one refractive optical element may be selected from a lens or a combination of at least two lenses, such as a combination of a wide-angle lens and a biconvex lens. However, other kinds of refractive optical elements, in particular various kinds of lenses, may also be feasible.

Further according to step a), an image line of the image of the target is selected. Whereas the target image is, in general, provided as a two-dimensional representation, the image line is extracted from the target image according to step a), in particular for a purpose of spatial scanning of the target image. As generally used, the term "spatial scanning" refers to selecting a partition of the image, specifically of the target image, for further processing of this selected partition. By successively selecting further partitions, specifically adjacent partitions of the target image, the whole target image can, consecutively, be processed in this fashion in order to acquire the above-indicated spatially-resolved spectral information about the target. According to the present invention, the selected partition of the target image comprises the desired image line of the target image. For a purpose of selecting the desired image line from the target image, preferably, an optical slit is used, wherein the term "optical slit" refers to an optical element having a slit aperture which, upon impingement by incident light, e.g. by incident light having a Gaussian spatial distribution, only transmits that partition of the received light which actually impinges on the slit aperture. Herein, the optical slit may exhibit an elongate shape, preferably a rectangular shape, wherein a length of the rectangle may exceed a width of the rectangle by a factor of at least 5, preferably of at least 10, more preferred of at least 25. Further, the width of the rectangle may be 5 µm to 100 µm, preferably 10 µm to 25 µm, in particular 20 µm.

Preferably, the optical slit may be provided in an arrangement of a mounted optical slit which can, moreover, be applied to a drive unit being designated for allowing a rotation of the optical slit, specifically around an optical axis which can, in particular, be defined by a direction of a propagation of the incident light. As generally used, the term "drive unit" refers to an arrangement in which the mounted optical slit can be rotated around a range of angles, preferably 360°, around. However, a rotation of 180° of the mounted optical slit can be sufficient for covering all spatial positions of the target image, in particular, in a case in which the mounted optical slit may be arranged in a symmetrical fashion with respect to the optical axis of the device.

Further according to step a), an orientation of the selected image line is defined by an extension of the selected image line. As already indicated above, the image line as selected from the target image may, preferably, be provided by using the optical slit and may, thus, generally render the form of the optical slit. Consequently, the image line may assume the elongate shape, preferably the rectangular shape, of the optical slit. As a result, the length of the selected image line can, therefore, be used for defining an orientation of the selected image line along the length of the elongate shape, preferably the rectangular shape, of the image line. The orientation of the selected image line can, preferably, be provided in form of an angle with respect to any reference direction. As described below in more detail, it may particularly be preferred according to the present invention to specify the orientation of the image line as an angle with respect to a reference orientation of a diffractive optical element which is used during step c) for generating a spectrum for a plurality of points on the selected image line.

According to step b), the selected image line is rotated in a manner that the orientation of the image line is aligned with respect to a reference orientation of a diffractive optical element. In other words, the orientation of the image line is, irrespective of an actual direction of the mounted optical slit, modified in a fashion that it is, eventually, aligned with respect to the reference orientation of the diffractive optical element. Herein, the reference orientation may, preferably, be a vertical upright position of the diffractive optical element. However, the reference orientation may also exhibit a different direction. As a result of this alignment in orientation, the selected image line impinges on the diffractive optical element in a manner that the diffractive optical element is capable of generating the desired spectrum for the plurality of the points which are selected on the image line. This alignment avoids a disadvantageous situation in which the diffracted light for every point on the image line may be projected over a different range of pixel columns of an image sensor as described below in more detail, thereby inhibiting an extraction of the desired spectral information from the recorded signal due to an overlap between different spectral bands within the pixel columns of the image sensor.

For this purpose, a so-denominated "derotator" may be applied. In a particularly preferred embodiment of the present invention, an image rotating prism may be used for rotating the selected image line during step b). As generally used, the term "image rotating prism" refers to a prism which is designed for rotating, inverting and/or reverting an image, specifically the target image. In a particularly preferred embodiment of the present invention, a Dove prism is used. However, a further kind of an image rotating prism, such as a Pechan prism, or a Delta prism may also be feasible.

In a particularly preferred embodiment, the Dove prism may be rotated during step b) by an angle of θ/2 upon a deviation of the orientation of the image line from the reference orientation of the diffractive optical element by the angle of θ. Geometrically, an oriented Dove prism *DP(α)* can be considered as a linear optical element comprising a reflection symmetry plane positioned at an angle *α* which is designated for optically inverting a traversing image *I* about the reflection symmetry plane. For a rotating image *I(θ)* which impinges on the Dove prism, if the reflection symmetry plane is rotated at half the rate of the rotating image, the image is always reflected back to the same reference position *θ_{ref}*, which results in *I(θ_{ref})* = *DP(θ-θ_{ref})*/*2)* · *I(θ-θ_{ref}).* Thus, rotating the Dove prism with half the rotation angle of the optical slit, the image line is rotated back and transmitted from the Dove prism with an orientation which is aligned with the reference orientation of the diffractive optical element as desired according to the present invention. Consequently, for each position of the optical slit, the Dove prism can be used for compensating the rotation of the image line by rotating the Dove prism back to a position in which the orientation of the image line is aligned with the reference orientation of the diffractive optical element in order to avoid the overlap of the spectral bands when the diffracted light is projected over the image sensor. Thus, by using the combination of the rotating optical slit and the Dove prism, the target image can be spatially scanned through the slit rotation, while the Dove prism can be used to cancel the rotational effects in order to facilitate data acquisition and extraction of the desired spectral information. This kind of arrangement ensures that the diffracted light is projected onto the image sensor in the same orientation for each orientation of the optical slit, thus, preserving the spectral calibration of the device, utilizing the full resolution of the image sensor, and saving time and efforts with respect to data processing. Similar advantages can also be achieved *mutatis mutandis* by using a different image rotating prism apart from the Dove prism.

In a preferred embodiment, the spectral calibration of the device can be performed by assigning one or more pixel columns to a unique spectral band within the spectral range of the device, such as between 400 nm and 750 nm. Herein, the spectral range may be amended by changing the image sensor and the optical elements as well as their relative arrangement. In particular, the wavelengths of three different lasers can be employed as a calibration reference, wherein, by using the distances between the three spectral lines, it is preferable to determine the wavelength to be assigned for each pixel column by interpolation. However, further kinds of calibration references may also be used, such as a different number of laser sources with differing wavelengths, or spectral calibration lamps. After establishing the spectral calibration, the device can be used for performing spectral imaging and extracting the spectral information of the target with absolute wavelength values.

In a further preferred embodiment, a collimating optical element may further be located between the mounted optical slit and the image rotating prism, wherein the term "collimating optical element" refers to an optical element which is designated for collimating the light of the selected image line prior to impingement on the image rotating prism. As a result thereof, a beam path of the light which had been passing through the optical slit is narrowed before it travels through the image rotating prism.

According to step c), for a plurality of points on the selected image line a spectrum is generated by using the diffractive optical element. As generally used, the term "spectrum" refers to a wavelength-resolved spectral information related to a property of the light being emitted by the target itself and/or as a response of the target to an illumination by an external illumination source as indicated above. Herein, a plurality of points on the selected image line is chosen for each of which the spectrum is actually generated. Further, the term "diffractive optical element" refers to an optical element having a periodic structure which is designated for diffracting light into a plurality of beams travelling in different directions. As already indicated above, the periodic structure of the diffractive optical element, which can be selected from a transmission grating or a reflective grating, may provide the reference orientation to which the orientation of the image line is aligned to during step b). Herein, the diffractive optical element may, preferably, be selected from at least one of a transmission grating and a further prism, wherein the transmission grating may particularly be preferred. Specifically, the transmission grating comprises a plurality of parallel lines, which are, in particular, caused by gratings or ridges being introduced into a transparent body of the transmission grating, wherein a direction of the parallel lines generate the reference orientation of the transmission grating which is used for the alignment according to step b). However, a dispersive element, in particular a dispersive prism, can also be used for generating the spectrum.

According to step d), the spectrum of the image line as generated by the diffractive optical element is recorded, preferably by using an image sensor. As generally used, the term "image sensor" refers to a sensor unit which is designated for providing an image upon impingement of electromagnetic radiation. Herein, the image sensor may, preferably, be selected from a CCD or a CMOS sensor, more preferred a monochrome CCD sensor. A minimum of a single refractive optical element may be used to project the spectrum on the sensor pixels. However, other kinds of image sensors, such as InGaAs, HgCdTe, or InSb sensors for the infrared range may also be feasible.

In a preferred embodiment, the image sensor may be placed on a selected location with respect to the diffractive optical element, in particular, in order to record a selected partition of the spectrum, such as a particular diffraction order. Most preferred, the image sensor may be positioned at an angle with respect to the transmission grating which may correspond to a first diffraction order of the spectrum of the selected image line.

According to step e), the orientation of the image line according to step a) is modified, in particular successively modified. Herein, the term "successively" refers to a rotational procedure in which one value for the orientation of the image line is selected after the other. For this purpose, the optical slit may, preferably, be rotated by using the drive unit to which the optical slit may be applied to, in particular around the optical axis which is defined by the direction of the propagation of the incident light, specifically by rotating the optical slit by a predefined angle, such as by using a stepper motor as the drive unit. Herein, the predefined angle may be selected from 0.1° to 10°, wherein, however, other values for the predefined angle or other kinds of rotational procedures may also be feasible.

Further according to step e), the steps b) to d) are repeated for each further value being selected for the orientation of the image line. For further information, reference may be made to the description of steps b) to d) which are described above and below in more detail.

Further according to step e), the spatially-resolved spectral information about the target is, eventually, acquired by combining spectra which are recorded for each selected value for the orientation of the image line into the spatially-resolved spectral information. For this purpose, the image sensor may, in particular, be designated for transferring the recorded spectrum of the image line to an evaluation device. Herein, the evaluation device may, apart from being designated for acquiring the spatially-resolved spectral information about the target by combining the spectra provided by the image sensor as described above, be further designated for effecting the rotation of both the mounted optical slit and the image rotating prism.

As used herein, the term "evaluation device" refers to an arbitrary apparatus which is designed for generating at least one item of spatially-resolved spectral information with respect to the target as well as for effecting the rotation of the mounted optical slit and the image rotating prism. Herein, the evaluation device may be provided as an integral part of the image sensor and/or may be provided as an individual unit. The evaluation device may comprise at least one integrated circuit, such as one or more application-specific integrated circuits (ASICs) or field programmable gate arrays (FPGAs), and/or at least one data processing device, such as one or more computers, preferably one or more microcomputers and/or microcontrollers. Additional components may be comprised, such at least one preprocessing device and/or data acquisition device, such as one or more devices for receiving and/or preprocessing of an image signal, such as one or more AD-converters and/or one or more filters. Further, the evaluation device may comprise at least one data storage device. Further, the evaluation device may comprise at least one interface, such as one or more wireless interfaces and/or one or more wire-bound interfaces.

Further, the evaluation device may be adapted to perform at least one computer program, specifically a computer program performing or supporting a step of generating the at least one item of spatially-resolved spectral information. Herein, at least one algorithm may be implemented which may, by using the recorded spectrum and the orientation of the image line as input variables, perform a transformation into the at least one item of spatially-resolved spectral information of the target.

In a further aspect, the present invention relates to a device for acquiring spatially-resolved spectral information about a target, which is, particularly, designated for performing the method for acquiring spatially-resolved spectral information about the target as described above and/or below. According to the present invention, the device comprises
- a mounted optical slit, wherein the mounted optical slit is designated for selecting an image line of an image of the target, wherein an extension of the image line defines an orientation of the image line;
- an image rotating prism, wherein the image rotating prism is designated for rotating the selected image line in a manner that the orientation of the image line is aligned with respect to a reference orientation of a diffractive optical element and transmitting it to the diffractive optical element;
- the diffractive optical element which is designated for generating a spectrum for a plurality of points on the selected image line;
- an image sensor, wherein the image sensor is designated for recording the spectrum of the image line and transferring it to an evaluation device; and
- an evaluation device, wherein the evaluation device is designated for effecting a rotation of the mounted optical slit and of the image rotating prism, and wherein the evaluation device is further designated for acquiring the spatially-resolved spectral information about the target by combining the spectra provided by the image sensor.

For further details concerning the device for acquiring spatially-resolved spectral information about a target, reference may be made to the description of the method for acquiring spatially-resolved spectral information about the target above and/or below.

The spatially-resolved spectral information as acquired by the method and the device according to the present invention can be used for various purposes. A well-known purpose is determining a chemical composition of a target in a contact-free non-destructive fashion. However, further applications can be found in
- medical diagnostics, such as detection of cancer cells, monitoring ischemia, early detection of dental caries, or monitoring of a health status of a patient;
- agriculture, such as monitoring of crops, plant classification, or disease detection in plants;
- food processing, such as detecting E. coli and Salmonella, identifying expired salmon, quantifying concentration of bacteria in meat and on food processing equipment; customer monitoring of food with respect to bacteria, expired products, or allergens;
- industry, such as raw material sorting, or quality assessment;
- environmental monitoring, such as a detection of chemical and biological substances;
- surveillance, such as detection of explosives and narcotics, or security inspection in ports or airports.

Still, further kinds of uses are conceivable.

The method and device for acquiring spatially-resolved spectral information about a target according to the present invention exhibit various advantages with respect to known methods and devices which are used for this purpose. In particular, the method and device enable spatial scanning of the target image internally without need for a relative motion between the target and an image sensor for which additional external equipment may, typically, be required. Rather, the device employs active internal components for the spatial scanning, thereby reducing complexity, size, and expenses compared to using external equipment. This advantage may become particularly useful in applications where introducing a relative motion may be inconvenient or difficult to achieve. Such applications include medical diagnosis in clinics where it would be more convenient to scan the patient without relative motion. Another scenario where relative motion could be difficult to introduce may be monitoring and identifying pollutants in the environment.

Further, the method and the device ensure that light emitted from or reflected by the target is transmitted to the diffractive optical element without a change in incidence angle, thereby simplifying data acquisition when determining the spatially-resolved spectral information. In other words, projecting the light, for each image line, in the same orientation with respect to the diffractive optical element maintains the spectral calibration of the device and allows using the full resolution of the image sensor. Further, the method and device as described herein provide a simple configuration that may open the door for further applications in future.

### Short description of the Figures

Further optional features and embodiments of the present invention are disclosed in more detail in the subsequent description of preferred embodiments, preferably in conjunction with the dependent claims. Therein, the respective optional features may be realized in an isolated fashion as well as in any arbitrary feasible combination, as the skilled person will realize. It is emphasized here that the scope of the invention is not restricted by the preferred embodiments.

In the Figures:
- Figure 1: illustrates a particularly preferred embodiment of a device for acquiring spatially-resolved spectral information about a target;
- Figure 2: illustrates a particularly preferred embodiment of a method for acquiring the spatially-resolved spectral information about the target; and
- Figure 3: illustrates experimentally extracted spectra for plant leaf samples in a validation experiment.

### Detailed description of the embodiments

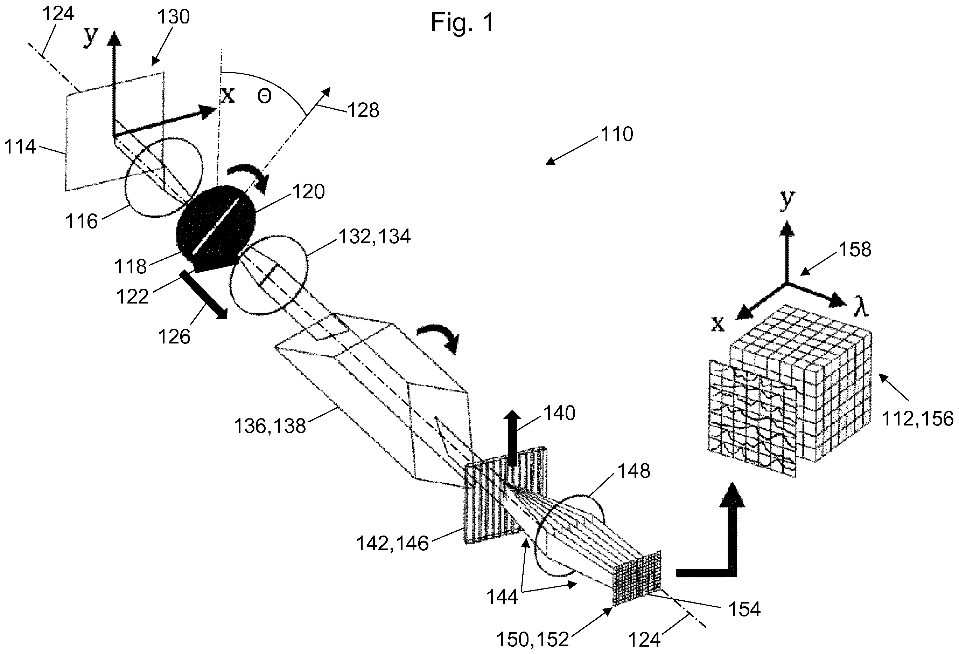

Figure 1 schematically illustrates a particularly preferred embodiment of an imaging device 110 for acquiring spatially-resolved spectral information 112 about a target 114. As indicated above, the target 114 refers to any kind of object that can be accessed and analyzed by performing the method according to the present invention. Hereby, light which can be used for this purpose may originate from the target 114 itself. Alternatively or in addition, an external further origin of the light may also be possible, wherein the object and/or a reflection device connected to the object may reflect the light which is, eventually, propagating from the target 114 to the device 110.

As illustrated in Figure 1, the device 110 comprises a front optics which is designed for receiving the light which is propagating from the target 114 to the device 110. Herein, the front optics comprises at least one refractive optical element 116 which is designated for generating an intermediate target image of the target 114 at a focal plane 118. In this particular embodiment, the refractive optical element 116 comprises a combination of two lenses, specifically of a wide-angle lens and a biconvex lens (not depicted here), however, other kinds of lenses or combinations thereof may also be feasible.

Further, the device 110 comprises a mounted optical slit 120 which is positioned at the focal plane 118 for a purpose of selecting an image line from the target image being generated at the focal plane 118. Herein, the mounted optical slit 120 exhibits a width of 5 µm to 100 µm, preferably of 10 µm to 25 µm, in particular of 20 µm. The mounted optical slit 120 is applied to a drive unit 122 which is designated for allowing a rotation of the optical slit 120 around an optical axis 124 which can here be defined by a direction 126 of a propagation of the incident light. As schematically depicted in Figure 1, an extension of the image line as generated by the mounted optical slit 120 defines an orientation 128 of the image line.

Although the mounted optical slit 120 can be rotated here around an arbitrary angle 0° ≤ θ ≤ 360°, a rotation of 0° ≤ θ ≤ 180° of the mounted optical slit 120 would, however, be sufficient for covering all spatial positions of the target image, in particular, since the mounted optical slit 120 is arranged here in a symmetrical fashion with respect to the optical axis 124 of the device 110. As further depicted here, a two-dimensional coordinate system 130 may be defined here with regard to the target 114 by directions x and *y* which are perpendicular to the optical axis 124 of the device 110 and perpendicular with respect to each other.

In the particular embodiment as depicted in Figure 1, the device 110 also comprises a collimating optical element 132 which is designated for collimating and magnifying the image line generated by the mounted optical slit 120. For the purpose of the collimating optical element 132, a microscope objective 134 may be used.

Further, the device 110 comprises an image rotating prism 136 which is designated for receiving the collimated light beam provided by the collimating optical element 132 and for rotating the selected image line. As schematically illustrated in Figure 1, the image rotating prism 136 may, preferably, be or comprise a Dove prism 138. Alternatively, a further kind of an image rotating prism 136 may be selected, such as a Pechan prism, or a Delta prism.

In accordance with to the present invention, the image rotating prism 136 acts as a derotator and is, therefore, rotated in a manner that the orientation 128 of the image line is aligned with respect to a reference orientation 140 of a diffractive optical element 142. For this purpose, the image rotating prism 136 is rotated by an angle θ/2, wherein θ is the angle of rotation of the mounted optical slit 120. In addition to rotating the orientation 128 of the image line, the image rotating prism 136 transmits the rotated image line to the diffractive optical element 142. In this fashion the image rotating prism 136 may be rotated in order to bring the image line back to the reference orientation 140 of a diffractive optical element 142, which may, as depicted in Figure 1, be a vertical upright orientation, before the light is transmitted to the diffractive optical element 142.

Thus, the device 110 comprises the diffractive optical element 142 which is designated for generating a spectrum 144 for a plurality of points on the selected image line. Herein, the diffractive optical element 142 may, preferably, be a transmission grating 146 which comprises a plurality of parallel lines, preferably of 100 lines/mm to 1500 lines/mm, such as 300 lines/mm. Herein, the parallel lines may, especially, be caused by gratings or ridges being introduced into a transparent body of the transmission grating 146. In particular, a direction of the parallel lines may generate the reference orientation 140 of the transmission grating 146 which is used for the alignment with the orientation 128 of the image line as described above. However, a dispersive element, in particular a dispersive prism, can also be used for generating the spectrum 144.

Further, the device 110 may comprise a focusing lens 148 which may be used to transmit the light from the diffractive optical element 142 to an image sensor 150 as further comprised by the device 110. Herein, the image sensor 150 is designated for recording the spectrum 144 of the image line as generated by the diffractive optical element 142. For this purpose, the image sensor 150 may, preferably, be a CCD sensor, more preferred a monochrome CCD sensor 152. However, other kinds of image sensors, such as a CMOS sensor may also be feasible. Herein, the image sensor 150 may be positioned at an angle with respect to the optical axis 124 of the device 110 which may correspond to a first diffraction order of the spectrum 144 of the selected image line.

Further, the image sensor 150 is designated for transferring the spectrum 144 of the image line as generated by the diffractive optical element 142 to an evaluation device 154 also comprised by the device 110. Herein, the evaluation device 154 is designated for acquiring the spatially-resolved spectral information 112 about the target 114 by combining the spectra 144 as provided by the image sensor 150 for different angles θ by which the mounted optical slit 120 is rotated. For this purpose, the evaluation device 154 is further designated for effecting a rotation of the mounted optical slit 120 and of the image rotating prism 136 for compensating the rotation of the image line.

Further according to the present invention, the spatially-resolved spectral information 112 about the target 114 is acquired by modifying the orientation 128 of the image line, preferably in a successive manner. For this purpose, the mounted optical slit 120 may, preferably, be rotated into a different position by using the drive unit 122, which may, in particular, be or comprise a stepper motor, around the optical axis 124, specifically by rotating the mounted optical slit 120 by a predefined angle, such as selected from 0.1° to 10°. For every further position of the mounted optical slit 120, a further spectrum 144 of the image line is recorded. By combining the recorded spectra 144, the spatially-resolved spectral information 112 about the target 114 is acquired, as schematically depicted in Figure 1, in form of a hyperspectral cube 156, in which each recorded spectrum 144 represents a single plane thereof. Thus, the hyperspectral cube 156 is a three-dimensional graphical representation 158 of the data acquired in this manner, wherein two spatial dimensions x and *y* cover the spatial imaging data, hereby copying the directions *x* and *y* of the target 114 with respect to the two-dimensional coordinate system 130, and a further spectral dimension having a direction *λ* which comprises the spectroscopy data.

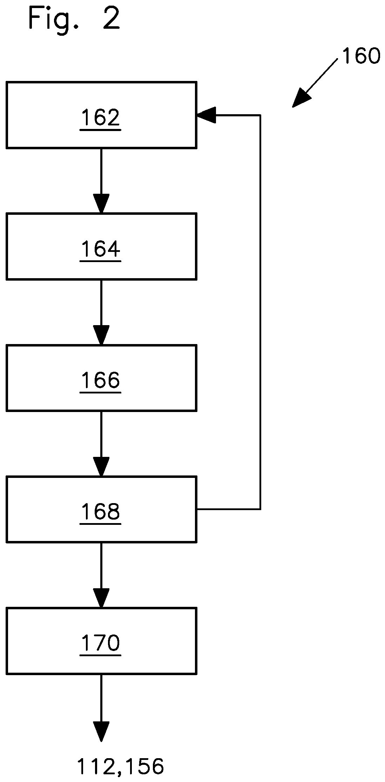

Figure 2 illustrates a particularly preferred embodiment of a method 160 for acquiring the spatially-resolved spectral information 112 about the target 114.

According to a selecting step 162, an image line is selected from the target image, wherein an extension of the image line defines the 128 orientation of the image line.

According to a rotating step 164, the selected image line is rotated in a manner by using the image rotating prism 136 in a fashion that the orientation 128 of the image line is aligned with respect to the reference orientation 140 of the diffractive optical element142.

According to a generating step 166, the spectrum 144 is generated for a plurality of points on the selected image line by using the diffractive optical element 142.

According to a recording step 168; the spectrum 144 of the selected image line is recorded by using the image sensor 150.

Subsequently, the selecting step 162 is further performed in a manner that orientation 128 of the image line is modified and a further image line is selected from the target image. Thereafter, the rotating step 164, generating step 166, and the recording step 168 are successively performed in this order. In a combining step 170, wherein the recorded spectra 144 for each selected image line are combined, the desired spatially-resolved spectral information 112 about the target 114 is obtained, preferably in form of the hyperspectral cube 156 as schematically illustrated in Figure 1.

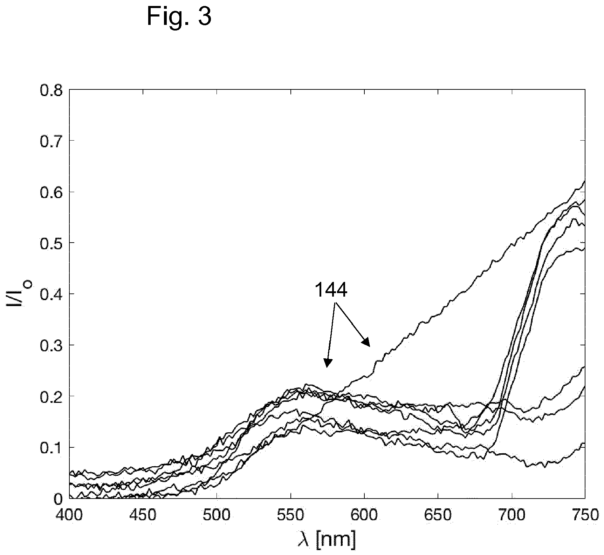

Figure 3 illustrates experimentally extracted spectra for plant leaf samples in a validation experiment. Eight disk-shaped samples 1... 8 taken from real and artificial plant leaves, respectively, are used as the target 114 by fixing to a plane and arranging in a circular array. For this purpose, pairs of leaves are fixed along a single angular line such that two leaves can be selected at the same time when the mounted optical slit 120 is rotated to the angle θ. The target 114 is illuminated with two quartz tungsten halogen lamps having a broadband emission using, in addition, two diffuser plates for distributing the light over the samples. Starting with sample leaf 1 and leaf 2, the mounted optical slit 120 and the Dove prism 138 are kept in the vertical upright position without any rotation to allow the light to transmit directly to the diffraction grating 146. The diffraction image carrying the spectral information for the sample is recorded by the monochrome CCD camera 152 which is used for recording the light intensity in each spectral band without any filters. For the other leaves, the mounted optical slit 120 is rotated with the designated angle θ for each pair of leaves, the Dove prism 138 is rotated with half the designated angle θ/2, and their diffraction images are recorded by the monochrome CCD camera 152.

Subsequently, the spectral information as obtained in this fashion for each leaf 1 ... 8 is extracted using an algorithm, preferably by plotting a normalized light intensity I/I₀ as recorded in each spectral band over the spectral range of the device for a wavelength *λ* of 400 nm ≤ *λ* ≤ 750 nm. The acquired spectra for the eight leaves 1 ... 8 are illustrated in Figure 3. By comparing the spectra 144, the real and the artificial leaves can easily be distinguished. The spectra of leaves 2, 3, 5, and 6 are similar to each other and, additionally, similar to the spectrum of chlorophyll, which is a well-known dye comprised by green plant leaves. This experiment provides validation for the present method and device and demonstrates a use in applications such as material sorting or target detection.

### List of Reference Signs

- 110: device
- 112: spatially-resolved spectral information
- 114: target
- 116: refractive optical element
- 118: focal plane
- 120: mounted optical slit
- 122: drive unit
- 124: optical axis
- 126: direction of incident light
- 128: orientation of image line
- 130: two-dimensional coordinate system
- 132: collimating optical element
- 134: microscope objective
- 136: image rotating prism
- 138: Dove prism
- 140: reference orientation
- 142: diffractive optical element
- 144: spectrum
- 146: transmission grating
- 148: focusing lens
- 150: image sensor
- 152: monochrome CCD camera
- 154: evaluation device
- 156: hyperspectral cube
- 158: three-dimensional graphical representation
- 160: method
- 162: selecting step
- 164: rotating step
- 166: generating step
- 168: recording step
- 170: combining step

## Claims

1. A method (160) for acquiring spatially-resolved spectral information (112) about a target (114), the method (160) comprising the following steps:
a) selecting an image line from an image of the target (114), wherein an extension of the image line defines an orientation (128) of the image line;
b) rotating the selected image line in a manner that the orientation (128) of the image line is aligned with respect to a reference orientation (140) of a diffractive optical element (142);
c) generating a spectrum (144) for a plurality of points on the selected image line by using the diffractive optical element (142);
d) recording the spectrum (144) of the selected image line; and
e) acquiring the spatially-resolved spectral information (112) about the target (114) by modifying the orientation (128) of the image line according to step a), repeating steps b) to d), and combining the recorded spectra (144).

2. The method (160) according to the preceding claim, wherein the selected image line is rotated according to step b) by using an image rotating prism (136).

3. The method (160) according to the preceding claim, wherein the image rotating prism (136) is selected from at least one of Dove prism (138), a Pechan prism, or a Delta prism.

4. The method (160) according to any one of the two preceding claims, wherein the image rotating prism (136) is rotated by an angle of θ/2, when the orientation of the image line is rotated by the angle of θ.

5. The method (160) according to any one of the preceding claims, wherein the image line is selected by using a mounted optical slit (120), wherein the mounted optical slit (120) is designated for receiving light propagating from the target (114) and for transmitting only a partition of the light impinging on an aperture of the mounted optical slit (120).

6. The method (160) according to the preceding claim, wherein the mounted optical slit (120) is placed at a focal plane (118) of the image of the target (114), wherein at least one refractive optical element (116) located between the target (114) and the mounted optical slit (120) is designated for generating the image of the target (114) at the focal plane (118).

7. The method (160) according to any one of the two preceding claims, wherein the mounted optical slit (120) is applied to a drive unit (122), wherein the drive unit (122) is designated for modifying a direction of the mounted optical slit (120).

8. A device (110) for acquiring spatially-resolved spectral information (112) about a target (114), comprising
- a mounted optical slit (120), wherein the mounted optical slit (120) is designated for selecting an image line of an image of the target (114), wherein an extension of the image line defines an orientation (128) of the image line;
- an image rotating prism (136), wherein the image rotating prism (136) is designated for rotating the selected image line in a manner that the orientation (128) of the image line is aligned with respect to a reference orientation (140) of a diffractive optical element (142) and transmitting it to the diffractive optical element (142);
- the diffractive optical element (142) which is designated for generating a spectrum (144) for a plurality of points on the selected image line;
- an image sensor (150), wherein the image sensor (150) is designated for recording the spectrum (144) of the image line and transferring it to an evaluation device (150); and
- an evaluation device (154), wherein the evaluation device (154) is designated for effecting a rotation of the mounted optical slit (120) and of the image rotating prism (136), and wherein the evaluation device (154) is further designated for acquiring the spatially-resolved spectral information (112) about the target (114) by combining the spectra (144) provided by the image sensor (150).

9. The device (110) according to the preceding claim, wherein the image rotating prism (136) is selected from at least one of Dove prism (138), a Pechan prism, or a Delta prism.

10. The device (110) according to any one of the two preceding claims, wherein the evaluation device (154) is designated for effecting the rotation of the image rotating prism (136) in a manner that the image rotating prism (136) is rotated by an angle of θ/2 when the mounted optical slit (120) is rotated by the angle of θ.

11. The device (110) according to any one of the three preceding claims, wherein the mounted optical slit (120) comprises a drive unit (122), wherein the drive unit (122) is designated for rotating the mounted optical slit (120).

12. The device (110) according to any one of the four preceding claims, wherein the mounted optical slit (120) is placed at a focal plane (118) of the image of the target (114).

13. The device (110) according to any one of the five preceding claim, further comprising at least one refractive optical element (116) located between the target (114) and the mounted optical slit (120), wherein the at least one refractive optical element (116) is designated for generating the image of the target (114) at the focal plane (118).

14. The device (110) according to any one of the six preceding claims, wherein the diffractive optical element (142) is selected from at least one of a transmission grating (146) or a further prism.

15. The device (110) according to any one of the seven preceding claims, further comprising a collimating optical element (132) located between the mounted optical slit (120) and the image rotating prism (136), wherein the collimating optical element (132) is designated for collimating the light of the selected image line prior to impingement on the image rotating prism (136).
